# EUROPEAN PATENT APPLICATION

(11) **EP 3 653 265 A1**
(43) Date of publication of application: **20.05.2020**
(21) Application number: 18205830.5
(22) Date of filing: 13.11.2018
(51) Int. Cl.: A62B 7/14, A61M 16/00

(54) **DEVICE FOR SUPPLYING BREATHING GAS TO A USER**

(71) Applicant: Airbus Operations GmbH, 21129 Hamburg (DE)
(72) Inventor: Bricard, Patrick, 21129 Hamburg (DE); Cremers, Jörg, 21129 Hamburg (DE); Martin, Timo, 21129 Hamburg (DE); Bezold, Andreas, 21129 Hamburg (DE); Augustin, Norbert, 21129 Hamburg (DE)
(74) Representative: LKGLOBAL Lorenz & Kopf PartG mbB Patentanwälte

(57) **Abstract**

The invention relates to a device for supplying breathing gas to a user, the device (10) comprising: a mask (12) having a breathing opening (22); and a bag (14) having a bag opening (23) that is connected to the breathing opening (22) in fluid communication, wherein the device (10) further comprises an adjustable exhalation valve (18), wherein the adjustable exhalation valve (18) is in fluid communication with the bag (14). Thus, the invention provides an improved device for supplying breathing gas to a user providing protection against hyperventilation, toxic gases and smoke.

## Description

The invention relates to a device for supplying breathing gas to a user, the device comprising: a mask having a breathing opening; and a bag having a bag opening that is connected to the breathing opening in fluid communication. Furthermore, the invention relates to an aerospace vehicle comprising at least one device for supplying breathing gas to a user.

Most present aircraft comprise devices for supplying air, oxygen or mixtures of oxygen and air to users, i.e. passengers and crew, in case of a decompression of the aircraft. About a flight level of 40000 feet, pure oxygen must be supplied to the passengers and the crew. This can lead to difficulties in breathing, for example hyperventilation. Breathing is more difficult if the oxygen is supplied with overpressure which is the case for pilots about 40000 feet.

DE 602 04 346 T2 describes an oxygen mask which shall protect the passengers of an aircraft from a decompression in great heights. The mask is coupled to a re-breathing bag which delays the re-breathing when the user breathes in. Furthermore, the mask comprises means which limit the oxygen which flows into the mask.
However, the prior art does not comprise any protection against hyperventilation.

Thus, there is the need for providing an improved device for supplying breathing gas to a user.

The object is solved by the features of the independent claims. Advantageous embodiments are subject matter of the dependent claims and the following description.

According to one aspect of the invention, a device for supplying breathing gas to a user is provided, the device comprising: a mask having a breathing opening; and a bag having a bag opening that is connected to the breathing opening in fluid communication, wherein the device further comprises an adjustable exhalation valve, wherein the adjustable exhalation valve is in fluid communication with the bag.

Thus, the invention provides a mask for a user, wherein the mask is in fluid communication with a bag, wherein the exhalation flow of the user flows through an adjustable exhalation valve. The adjustable exhalation valve is in fluid communication with the bag. The adjustability of the exhalation valve provides an adjustable exhalation flow, i.e. the adjustable exhalation valve may limit the amount of exhaled breathing gas that is removed from the device. Consequently, in at least one adjustment position, the adjustable exhalation valve has the effect that a portion of the exhaled breathing gas remains in the device. That portion can be collected in the bag. This means, that at least a portion of the carbon dioxide which is exhaled by the user does not leave the device nor the bag. Thus, the user will re-breathe the carbon dioxide and the carbon dioxide concentration in the device and in the user's blood will rise. This may avoid or treat hyperventilation.

In an example, the adjustable exhalation valve is arranged on the bag.

In this case, the exhalation flow will start at the mask and flow into the bag. The exhalation flow will increase the pressure in the bag. This will cause a flow through the adjustable exhalation valve. The bag will therefore store the exhalation gas which does not flow through the adjustable exhalation valve.

In another example, the adjustable exhalation valve may be arranged on the mask. This may simplify the handling of the adjustable exhalation valve since the exhalation valve may be easier to reach for user.

In an example, the device further comprises an adjustable inhalation valve being in fluid communication with the bag.

The adjustable inhalation valve allows for an adjustment of the inhalation flow. This means, the amount of inflowing breathing air being external to the device may be adjusted by the adjustable inhalation valve. Thus, the ratio of inhaled breathing gas may be adjusted between the external breathing gas and the breathing gas being arranged in the bag. Thus, the carbon dioxide concentration which shall be breathed in may be adjusted with the adjustable inhalation valve.

In an example, the adjustable inhalation valve is arranged on the bag.

In this case, when a user breathes in, the pressure in the bag will fall. This will cause an inhalation flow at the inhalation valve which flows through the bag and enters the mask. The inhalation flow and the contents of the bag will then not mix to a great amount such that the amount of carbon dioxide in the inhalation flow will not be decreased by the inhalation flow through the adjustable inhalation valve.

In another example, the adjustable inhalation valve is arranged on the mask. This may simplify the handling of the adjustable inhalation valve since the adjustable inhalation valve may be easier to reach for user.

In an example, the device further comprises a conduit having a first opening and a second opening, wherein the first opening is releasably connectable to the adjustable inhalation valve and wherein the second opening is connectable to an external breathing gas supply opening of an aerospace vehicle.

The bag may be filled with breathing gas by connecting the external breathing gas supply with the adjustable inhalation valve by the conduit. When the bag is filled with breathing gas the conduit may be released from the adjustable inhalation valve. A user of the device may then move independently from the breathing gas supply since the breathing gas stored in the bag will provide a mobile breathing gas source. Furthermore, the adjustable exhalation valve and the adjustable inhalation valve may be closed such that the user will only breathe air from the bag. Particularly in case of fire, a user may first inflate the bag with breathing gas from the breathing gas supply and then use that breathing gas in the bag to get off the plane through the smoke and the toxic gases being released by the fire. In addition, the bag will be used as re-breathing bag, i.e. hyperventilation may still be prevented.

In an example, the device further comprises an adjustable dilution valve being in fluid communication with the bag.

The adjustable dilution valve will add some ambient gas to the inhaled breathing gas coming from the bag. Due to the adjustability of the adjustable dilution valve, the amount of ambient gas which is added to the inhaled breathing gas may be adjusted. For example, if the bag is filled with pure oxygen, the dilution valve may add some carbon dioxide to the pure oxygen when the user inhales by adding some ambient gas to pure oxygen. This will avoid hyperventilation due to the increase of carbon dioxide in the inhaled breathing air.

In a further example, the adjustable dilution valve is arranged on the bag.

Due to the arrangement of the adjustable dilution valve on the bag, the contents of the bag will be diluted when user inhales. Due to the path of the dilution gas flow from the adjustable dilution valve through the bag and to the mask, the dilution of the breathing gas in the bag may happen along the full length of the path. Thus, the dilution of the breathing gas in the bag is very efficient.

In another example, the adjustable dilution valve is arranged on the mask. This may simplify the handling of the adjustable dilution valve since the adjustable dilution valve may be easier to reach for user.

In an example, the bag comprises a breathing gas inlet opening comprising a separation plug, wherein the separation plug comprises an open position and a closed position, wherein in the open position of the separation plug, the breathing gas inlet opening is connected in fluid communication with an emergency breathing gas supply opening of an aerospace vehicle, wherein in the closed position, the separation plug is configured to close the breathing gas inlet opening and to separate the breathing gas inlet opening from the emergency breathing gas supply opening.

Common emergency breathing gas masks for passengers and cabin crew are connected to a breathing gas supply in the aircraft. The breathing gas supply may be an oxygen supply. The separation plug may disconnect the connection between the breathing gas supply of the aircraft and the device, which may for example be an emergency breathing gas mask. Before disconnecting the device from the breathing gas supply of the aircraft the bag may be inflated with breathing gas from the breathing gas supply. The bag will then provide a mobile breathing gas supply for the user. The device may then be used for escaping the aircraft. In addition, the closing of the adjustable inhalation valve and the adjustable exhalation valve, the device may still avoid or treat hyperventilation due to the increase of carbon dioxide concentration in the bag.

In an example, the mask is a facial mask.

A facial mask may cover the nose and mouth and seal the user's nose and the mouth from the ambient air. Furthermore, a facial mask is easy to use. However, in another example, the mask may be in nose mask, an oronasal mask or a full-face mask which covers the complete face of the user or a full head mask which covers the complete head of the user. The facial mask may comprise a strip and/or a harness which may be put around a user's head to hold the mask in place.

According to a further aspect of the invention, a device for supplying breathing gas to a user is provided, the device comprising: a mask having a breathing opening; and a bag having a bag opening that is connected to the breathing opening; wherein an adapter is arranged between the bag opening and the breathing opening, the adapter comprising a seal ring having an open state and a sealing state; wherein the seal ring is configured to block fluid communication between the bag opening and the breathing opening in the sealing state, and wherein the seal ring is configured to provide fluid communication between the bag opening and the breathing opening in the open state.

The removal of the seal ring will provide fluid communication between the mask and the bag. The inlet to the bag is the fluid communication with the mask. This means, that the user may then breathe through the mask into or out of the bag, respectively. In one example, the bag may then be prefilled with breathing gas which will stay in the bag until the seal is removed. In another example, the bag is a self-inflatable bag which will inflate through the fluid communication with the mask when the seal is removed. Since the self-inflatable bag does not need much space for storing, space may be saved by using the self-inflatable bag. The user may then use the device to treat hyperventilation or to escape an aircraft in case of fire or smoke.

In an example, the mask is a facial mask.

A facial mask may cover the nose and mouth and seal the user's nose and the mouth from the ambient air. Furthermore, a facial mask is easy to use. However, in another example, the mask may be in nose mask, an oronasal mask or a full-face mask which covers the complete face of the user or a full head mask which covers the complete head of the user. The facial mask may comprise a strip and/or a harness which may be put around a user's head to hold the mask in place.

According to a further aspect of the invention, also an aerospace vehicle comprising at least one device according to the above description is provided.

The effects and further embodiments of an aerospace vehicle according to the present invention are analogous to the effects and embodiments of the description mentioned above. Thus, it is referred to the above description of the device.

In the following the invention is described by the means of an exemplary embodiment using the attached drawing.
- Fig. 1a, b: shows schematic drawings of the device according to the first aspect of the invention,
- Fig. 2: shows a schematic drawing of another embodiment of the device,
- Fig. 3: shows another schematic drawing of the device according to the first aspect of the invention,
- Fig. 4a, b: show schematic drawings of the device according to the second aspect of the invention, and
- Fig. 5: shows a schematic drawing of an aerospace vehicle comprising the device.

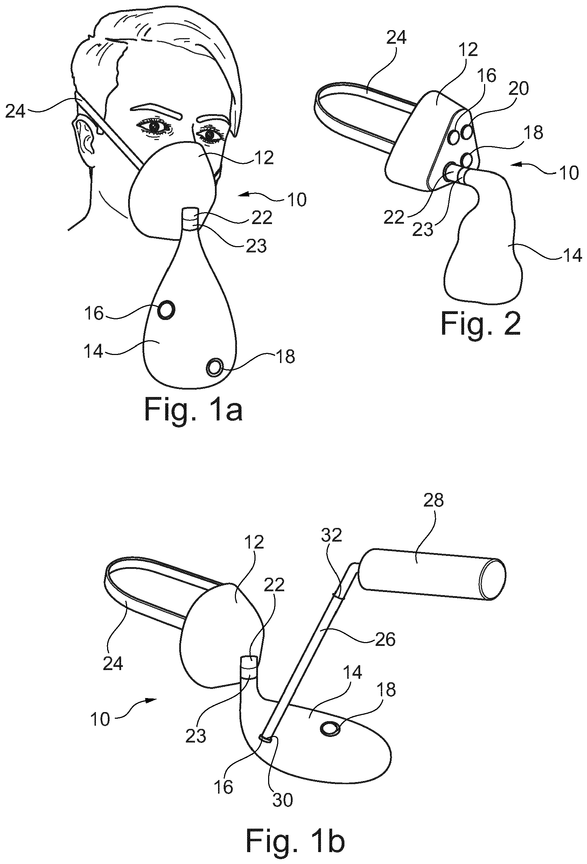

Fig. 1a and 1b show an embodiment of the device according to the first aspect of the invention. The device in its entirety according to the first aspect of the invention is denoted with the reference sign 10.

Fig. 1a shows a device 10 having a mask 12 and a bag 14. The mask 12 is a facial mask having a strap 24 for arranging the mask 12 on a user's face. Furthermore, the mask 12 comprises a breathing opening 22. The bag 14 comprises a bag opening 23 which is connected to the breathing opening 22 in fluid communication. This means, that gas can flow between the breathing opening 22 and the bag opening 23 into the bag 14.

The device 10 further comprises an adjustable inhalation valve 16 and an adjustable exhalation valve 18. In the embodiment according to fig. 1a, the adjustable inhalation valve 16 and the adjustable exhalation valve 18 are arranged on the bag 14.

When the pressure inside the bag 14 is smaller than the pressure outside of the bag 14, the adjustable inhalation valve 16 opens and the adjustable exhalation valve 18 closes. In that embodiment of the device 10, the adjustable inhalation valve 16 will let in ambient air into the device 10.

When the pressure inside the bag 14 is bigger than the pressure outside of the bag 14, the adjustable inhalation valve 16 closes and the adjustable exhalation valve 18 opens. At least a portion of the exhaled air of the user will then flow out of the adjustable exhalation valve 18 and stay in the device 10.

The adjustability of the adjustable inhalation valve 16 and the adjustable exhalation valve 18 means that the adjustable inhalation valve 16 and the adjustable exhalation valve 18 may comprise at least an open state and a partially open state. In the partially open state, the adjustable valves have less breathing gas throughput than in the open state. The adjustable inhalation valve 16 and the adjustable exhalation valve 18 may further have a closed state in which any breathing gas flow through the valve is blocked.

When the adjustable inhalation valve 16 and the adjustable exhalation valve 18 are blocked, i.e. if they are in the closed state, the user will increase the carbon dioxide concentration in the bag 14 by exhaling his breathing air into the bag 14. The increase of carbon dioxide concentration in the bag 14 will avoid hyperventilation for the user. If the user already hyperventilates, the closing of the adjustable inhalation valve 16 and the adjustable exhalation valve 18 may treat the hyperventilation.

Furthermore, in one embodiment the adjustable inhalation valve 16 and the adjustable exhalation valve 18 may be continuously adjustable between the closed state and the open state. In another embodiment, the adjustable inhalation valve 16 and the adjustable exhalation valve 18 may have separate distinct partially open states between the open state and the closed state. In one embodiment, the adjustable inhalation valve 16 and the adjustable exhalation valve 18 are 3-mode valves having an open state, a close state and an intermediate state which is between the open state and the closed state.

According to the embodiment of fig. 1a, the adjustable inhalation valve 16 may be arranged closer to the bag opening 23 than the adjustable exhalation valve 18. The closer arrangement of the adjustable inhalation valve 16 to the bag opening 23 results in a shorter flow path between the adjustable inhalation valve 16 and the mask 12 than between the adjustable exhalation valve 18 and the mask 12. Since the flow path between the adjustable exhalation valve 18 and the mask is long, the exhalation flow comprising the increased carbon dioxide concentration being breathed out by a user will be distributed in the inner space of the bag 14. Moreover, the positioning of the adjustable inhalation valve 16 close to the bag opening 23 may reduce the resistance for user during inhalation.

According to fig. 1b the device 10 may also comprise a conduit 26. The conduit 26 comprises a first opening 30 and a second opening 32. The first opening 30 may be releasably connected to the adjustable inhalation valve 16. This means, that the first opening 30 may be connected to the adjustable inhalation valve 16 and detached from the adjustable inhalation valve 16.

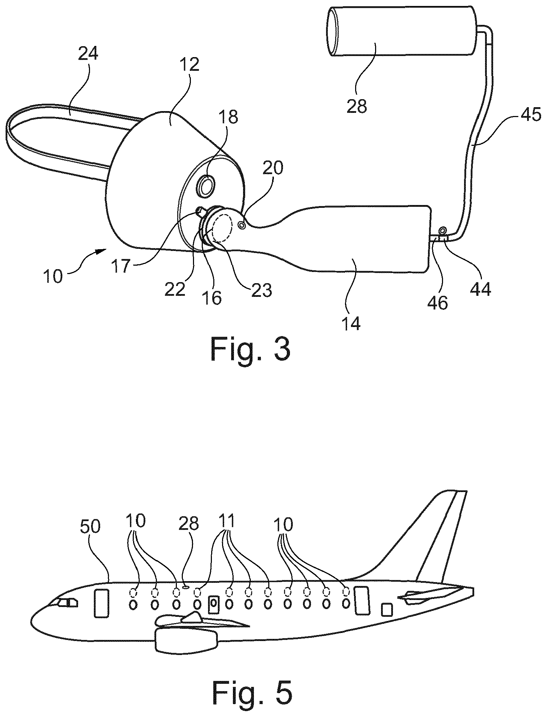

The second opening 32 may be connected to an external breathing gas supply 28 of an aerospace vehicle 50 being shown in fig. 5. The breathing gas supply 28 may be an oxygen supply comprising pure oxygen. The conduit 26 may be used to fill the bag 14 with breathing gas through the adjustable inhalation valve 16 from the external breathing gas supply 28. During and after filling the bag 14 with breathing gas, the adjustable exhalation valve 18 may be put in a closed state such that the breathing gas inside the bag 14 will not flow out through the adjustable exhalation valve 18.

Fig. 2 the shows another embodiment of the device 10. The difference between the embodiment of the fig. 2 and the embodiment of figs. 1a and 1b is the positioning of the adjustable inhalation valve 16 and the adjustable exhalation valve 18. In fig. 2, the adjustable inhalation valve 16 and the adjustable exhalation valve 18 arranged on the mask 12. Furthermore, the device 10 may comprise an adjustable dilution valve 20.

When the pressure inside the mask 12 is smaller than the pressure outside of the mask 12, the adjustable inhalation valve 16 opens and the adjustable exhalation valve 18 closes. In that embodiment of the device 10, the adjustable inhalation valve 16 will let in ambient air into the device 10.

When the pressure inside the mask 12 is bigger than the pressure outside of the mask 12, the adjustable inhalation valve 16 closes and the adjustable exhalation valve 18 opens. At least a portion of the exhaled air of the user will then flow out of the adjustable exhalation valve 18 and stay in the device 10.

The adjustable dilution valve 20 may be opened when the bag 14 comprises pure oxygen as breathing gas. The adjustable dilution valve 20 will then provide a small inflow of ambient air which will dilute the pure oxygen with a small amount of carbon dioxide.

Fig. 3 shows further embodiment of the device 10. In this embodiment, the adjustable inhalation valve 16 and the adjustable exhalation valve 18 arranged on the mask 12. Furthermore, the adjustable inhalation valve 16 is arranged between the breathing opening 22 and the bag opening 23. The adjustable inhalation valve 16 comprises a control element 17 for changing the opening state of the adjustable inhalation valve 16.

The bag 14 further comprises a breathing gas inlet opening 46 which is connected to an external breathing gas supply 28. The connection between the breathing gas inlet opening 46 and the external breathing gas supply 28 may be provided by a hose 45.

The bag 14 may further comprise the adjustable dilution valve 20 to dilute the breathing gas being provided by the external breathing gas supply 28.

The breathing gas inlet opening 46 comprises a separation plug 44 having an open position and a closed position. In the open position, the separation plug 44 provides fluid communication between the breathing gas inlet opening 46 and the hose 45, i.e. the external breathing gas supply 28. In the closed position, the separation plug 44 blocks fluid communication between the breathing gas inlet opening 46 and the external breathing gas supply 28. Furthermore, in the closed position, the separation plug 44 will separate the breathing gas inlet opening 46 from the hose 45, i.e. from the external breathing gas supply 28.

A user may fill the bag 14 with breathing gas from the external breathing gas supply 28 when the separation plug 44 is in the open state. After having filled the bag 14 with breathing gas, the user may put the separation plug 44 into the closed state to close the breathing gas inlet opening 46 and to separate the device 10 from the external breathing gas supply 28. The bag 14 may then provide a mobile breathing gas supply. This mobile breathing gas supply may be used for leaving an aircraft in fire and smoke conditions. In this case, the adjustable inhalation valve 16 and the adjustable exhalation valve 18 may be put into the closed state to avoid inhaling toxic gases or smoke. The bag 14 can then have a size for storing a breathing gas amount which will last at least for 90 seconds.

Furthermore, if the adjustable inhalation valve 16 and the adjustable exhalation valve 18 are in the closed state, the bag 14 will collect carbon dioxide with each exhalation of the user. This means that the carbon dioxide concentration in the bag 14 will rise such that hyperventilation of the user will be prevented.

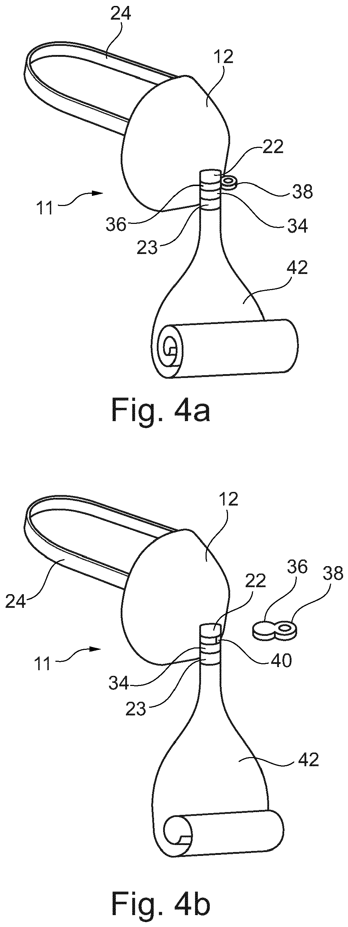

Fig. 4a shows an embodiment of the device of the further aspect of the present invention. The device of that embodiment is noted with the reference sign 11.

The device 11 comprises a mask 12 and a self-inflatable bag 42. The mask 12 comprises a strap 24 to hold the mask 12 on a user's face. Furthermore, the mask 12 comprises a breathing opening 22.

The self-inflatable bag 2 comprises a bag opening 23 which is connected to an adapter 34 which connects the bag opening 23 to the breathing opening 22. The adapter 34 comprises a seal ring 36. The seal ring 36 has an open state and a sealing state. In the open state, the seal ring 36 provides fluid communication between the bag opening 23 and the breathing opening 22. In the sealing state, the seal ring 36 blocks fluid communication between the bag opening 22 and the breathing opening 23. The seal ring 36 may further comprise a handle 38 with which a user can change the sealing state of the seal ring 36 to the open state.

In one embodiment, when putting the seal ring 36 into the open state, the seal ring 36 is removed from the adapter 34. For removing the seal ring 36, the adapter 34 may comprise a sealable opening 40 through which the seal ring 36 may be pulled out of the adapter 34 which is shown in fig. 4b.

When the seal ring 36 is put into the open state, the self-inflatable bag 42 will start to inflate which is also shown in fig 4b. During the inflation process of the self-inflatable bag 42, ambient air will flow in from the breathing opening 22 through the bag opening 23 into the self-inflatable bag 42.

After the inflation process is finished, the self-inflatable bag 42 might provide a mobile breathing gas supply to the user. In one embodiment, the bag 42 may have a size which stores breathing gas that will last for about 90 seconds. A user can then put the device 11 on the face. Since the self-inflatable bag 42 does not comprise any inhalation or exhalation valve, the user will breathe into and out of the self-inflatable bag 42. This means, that the carbon dioxide concentration in the self-inflatable bag 42 will rise with each exhalation of a user. This will prevent or treat hyperventilation of the user. Furthermore, the user is protected from toxic gases and smoke in case of fire.

Fig. 5 shows an aerospace vehicle according to a further aspect of the invention. The aerospace vehicle 50 comprises at least one device 10 according to the above description. Furthermore, the aerospace vehicle comprises at least one device 11 according to the above description.

The embodiment being described in fig. 5 does not exclude that in a further embodiment, the aerospace vehicle 50 may comprise only at least one device 10 or only at least one device 11.

## Claims

1. Device for supplying breathing gas to a user, the device (10) comprising:
a mask (12) having a breathing opening (22); and
a bag (14) having a bag opening (23) that is connected to the breathing opening (22) in fluid communication,
wherein the device (10) further comprises an adjustable exhalation valve (18),
wherein the adjustable exhalation valve (18) is in fluid communication with the bag (14).

2. Device according to claim 1, wherein the adjustable exhalation valve (18) is arranged on the bag (10).

3. Device according to one of claims 1 or 2, wherein the device (10) further comprises an adjustable inhalation valve (16) being in fluid communication with the bag (14).

4. Device according to claim 3, wherein the adjustable inhalation valve (16) is arranged on the bag (14).

5. Device according to one of claims 1 to 4, wherein the device (10) further comprises a conduit (26) having a first opening (30) and a second opening (32), wherein the first opening (30) is releasably connectable to the adjustable inhalation valve (16) and wherein the second opening (32) is connectable to an external breathing gas supply (28) opening of an aerospace vehicle (50).

6. Device according to claim 1 to 5, wherein the device further comprises an adjustable dilution valve (20) being in fluid communication with the bag (14).

7. Device according to claim 6, wherein the adjustable dilution valve (20) is arranged on the bag (14).

8. Device according to one of claims 1 to 7, wherein the bag (14) comprises a breathing gas inlet opening (46) comprising a separation plug (44), wherein the separation plug (44) comprises an open position and a closed position, wherein in the open position of the separation plug (44), the breathing gas inlet opening (46) is connected in fluid communication with an external breathing gas supply (28) of an aerospace vehicle (50), wherein in the closed position, the separation plug (44) is configured to close the breathing gas inlet opening (46) and to separate the breathing gas inlet opening (46) from the external breathing gas supply (28).

9. Device according to one of claims 1 to 8, wherein the mask (12) is a facial mask.

10. Device for supplying breathing gas to a user, the device (11) comprising:
a mask (12) having a breathing opening (22); and
a bag (14) having a bag opening (23) that is connected to the breathing opening (22);
wherein an adapter (34) is arranged between the bag opening (22) and the breathing opening (23), the adapter (34) comprising a seal ring (36) having an open state and a sealing state;
wherein the seal ring (36) is configured to block fluid communication between the bag opening (23) and the breathing opening (22) in the sealing state, and
wherein the seal ring (36) is configured to provide fluid communication between the bag opening (23) and the breathing opening (22) in the open state.

11. Device according to claim 10, wherein the bag (14) is a self-inflatable bag.

12. Device according to claim 10 or 11, wherein the mask (10) is a facial mask.

13. Aerospace vehicle comprising at least one device according to one of claims 1 to 12.
